# FASCICULE DE BREVET EUROPEEN

(11) **EP 1 073 010 B1**
(45) Date de publication et mention de la délivrance du brevet: **02.05.2002**
(21) Numéro de dépôt: 00401708.3
(22) Date de dépôt: 15.06.2000
(51) Int. Cl.: G06K 19/077

(54) **Procédé de fabrication d'un insert dans une carte à puce**
Verfahren zur Herstellung eines Chipkarteneinsatzes
Process for manufacturing a smart-card insert

(30) Priorité: 30.06.1999 FR 9908527
(43) Date de publication de la demande: 31.01.2001
(73) Titulaire: SAGEM S.A., 75015 Paris (FR)
(72) Inventeur: Bertiaux, Phillipe M., 95000 Cergy (FR)
(74) Mandataire: Schmit, Christian Norbert Marie

(56) Documents cités:
- EP-A- 0 387 366
- EP-A- 0 495 216
- FR-A- 2 622 323

## Description

La présente invention a pour objet un procédé de perfectionnement de fabrication d'un insert. Elle s'applique dans le domaine de la téléphonie mobile et plus particulièrement aux téléphones mobiles munis d'un insert lors de leur fabrication. Un insert est un jeton comportant un micromodule destiné à être inséré dans un téléphone mobile. Le but de l'invention est de diminuer une quantité de déchets associée à la réalisation d'un insert. On diminue ainsi un prix de revient d'un insert.

Actuellement pour réaliser un insert on utilise un support réalisé en respectant le standard ISO 7810. Un format d'un tel support correspond à un format d'une carte à puce. Les inserts quant à eux sont réalisés avec des dimensions définies dans la norme ETSI 11.11. Ainsi, un insert permet de réaliser un même type de fonction qu'une carte à puce mais avec des dimensions plus faibles et est surtout destiné à être inséré de façon amovible mais nécessairement en permanence dans un téléphone mobile, à l'inverse d'une carte à puce.

Il est connu de réaliser un insert en utilisant un support de carte à puce. Pour cela on réalise tout d'abord un évidement sur ce support destiné à accueillir un micromodule. Ce micromodule comporte des microcircuits de traitement d'informations. Dans une deuxième étape on réalise une prédécoupe débouchante autour de cet évidement afin de permettre de détacher ultérieurement l'insert de son support. Une fois ces opérations réalisées, on peut placer le micromodule dans l'évidement prévu à cet effet. On fixe le micromodule dans l'évidement avec de la colle par exemple. Les inserts ainsi réalisés sont ensuite envoyés à des opérateurs de téléphonie mobile avec leur support associé. Un opérateur programme un insert avec des informations qui lui sont propres. L'opérateur détache l'insert de son support et le fixe dans un téléphone mobile, cela dans le cas d'un téléphone mobile devant être muni d'un insert avant sa mise à disposition d'un utilisateur.

Une réalisation d'un insert utilise une chaîne de fabrication d'une carte à puce afin de pouvoir profiter d'une technique de fabrication éprouvée. En effet, mettre en oeuvre une technique propre de fabrication destinée à réaliser un insert serait trop contraignant. Une contrainte concerne notamment la fiabilité d'une telle chaîne de fabrication d'inserts. Un débit de fabrication de cartes à puce est de plusieurs millions d'unités par mois. Chaque étape de fabrication doit être rigoureusement contrôlée et des contraintes liées à la sécurité, une perte ou un vol d'inserts par exemple, sont très importantes. Ainsi, tous ces contrôles sont très délicats à mettre en oeuvre avec de tels débits. En conséquence, vu que toutes ces étapes sont déjà mises en oeuvre dans la fabrication des cartes à puce on préfère utiliser une chaîne de fabrication d'une carte à puce qu'on adapte à la fabrication d'un insert.

Cette réalisation présente des problèmes. En effet, une surface nécessaire pour réaliser un insert est de l'ordre de 10 % d'une surface totale d'une face du support. Une surface d'un tel support est de l'ordre de 46 cm² alors qu'une surface d'un insert'est de l'ordre de 4 cm². En conséquence, pour la réalisation d'un insert implique un gaspillage de matière de l'ordre de 90 % de la matière totale fournie pour réaliser un support. Un déchet correspond à cette partie inutilisée du support qui est restante après un détachement de l'insert. Un prix de revient d'un insert dépend de la quantité de matière totale utilisée pour réaliser cet insert. Un prix de revient d'un insert dépend d'un prix de revient d'un support de carte à puce.

De plus, un volume d'encombrement d'un insert nécessaire, notamment lors d'un stockage, est égal à un volume d'encombrement du support dans lequel l'insert est réalisé.

Dans l'état de la technique, on connait de l'enseignement du document EP-A-0 495 216, une carte à puce munie de deux inserts, chaque insert étant entouré d'une prédécoupe. Du document EP-A-0 337 366, on connait une carte à puce munie de deux puces, les puces pouvant être disposées sur des faces opposées de la carte.

La présente invention a pour objet de remédier à ces problèmes en proposant un procédé de perfectionnement de fabrication d'un insert. Dans l'invention, on optimise une quantité de matière utilisée pour la réalisation d'un insert. Pour ce faire, on réalise sur un même support plusieurs inserts. Ainsi, un prix de revient d'un insert inclut non plus le prix de revient d'un support mais une fraction du prix de revient du support. Cette fraction du prix de revient correspond au prix de revient du support divisé par un nombre d'inserts réalisés sur le support. De plus, avec le procédé de l'invention, on réalise des inserts en utilisant un procédé de réalisation d'un insert de l'état de la technique. En conséquence, on diminue un prix de revient d'un insert et on diminue de même un volume d'encombrement d'un stock d'inserts. Ainsi, pour une même quantité d'inserts on aura un encombrement et donc un poids réduit par rapport à l'état de la technique où un support ne comporte qu'un seul insert.

L'invention concerne donc un procédé de fabrication d'un insert sur un support dans lequel :
- on réalise une première cavité dans un premier endroit sur une première face de ce support,
- on réalise une prédécoupe autour d'un lieu destiné à recevoir la première cavité,
- on place un premier micromodule dans la première cavité et on obtient un premier insert,
caractérisé en ce que :
- on réalise une deuxième cavité dans un deuxième endroit sur une face du support,
- on réalise une prédécoupe autour d'un lieu destiné à recevoir la deuxième cavité,
- on place un deuxième micromodule dans la deuxième cavité et on obtient un deuxième insert.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation simplifiée et schématique d'une utilisation du procédé de l'invention ;
- Figure 2 : une représentation sous une forme d'un algorithme d'un fonctionnement du procédé de l'invention.

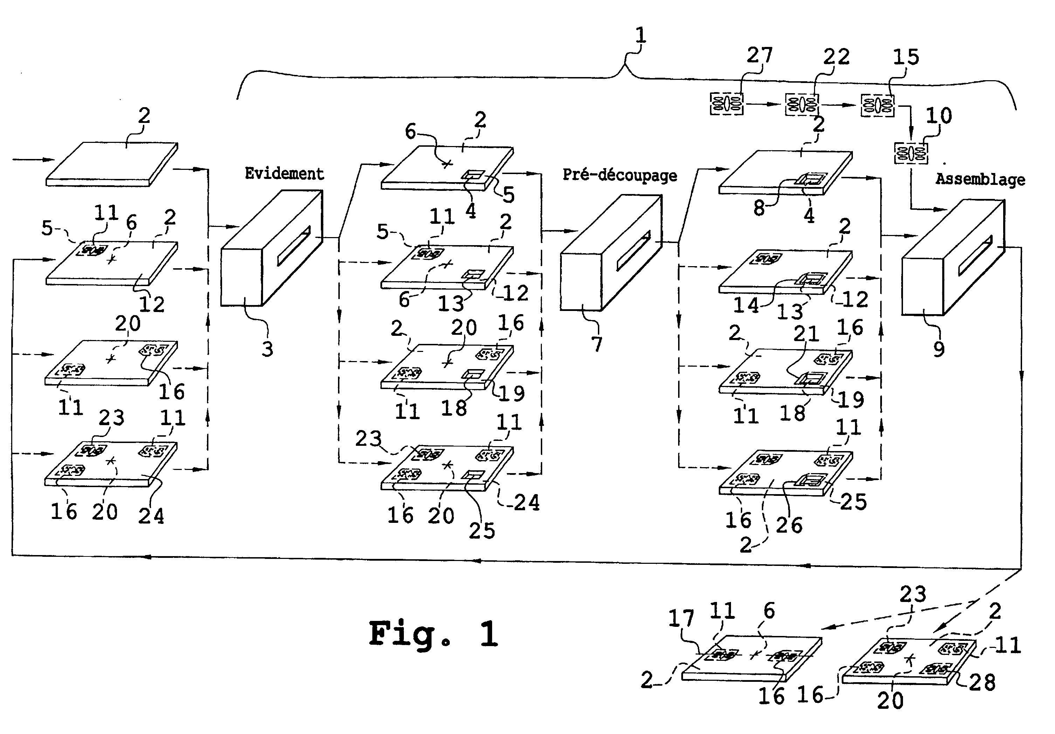

La figure 1 montre sous une forme schématique et simplifiée une chaîne 1 de réalisation d'un insert sur un support 2. Cette chaîne 1 comporte plusieurs moyens différents permettant d'effectuer les diverses opérations nécessaires à la réalisation d'un insert. La chaîne 1 comporte principalement un moyen 3 d'évidement. Ce moyen 3 reçoit à une entrée le support 2 dans lequel le moyen 3 réalise une première cavité 4 dans un premier endroit 5 sur une première face 6.

Le support 2, présent en sortie du moyen 3, est ensuite envoyé en entrée d'un moyen 7 de prédécoupage. Ce moyen 7 réalise une prédécoupe 8 débouchante autour d'un lieu destiné à recevoir la cavité 4. Dans cet exemple de réalisation, la cavité 4 a été réalisée avant la prédécoupe 8. Cependant, on pourrait dans très bien inverser une position dans la chaîne 1 du moyen 3 et du moyen 7, la prédécoupe étant ainsi réalisée avant de réaliser un évidement. Dans le reste de la description on considère qu'on réalise d'abord l'évidement puis le prédécoupage.

Une forme et des dimensions de la prédécoupe 8 sont connues dans la norme ETSI 11.11 et représente une forme rectangulaire de 25 mm x 15 mm dont un coin est biseauté. La prédécoupe 8 consiste en une découpe débouchante discontinue, séparée par des espaces de l'ordre de 1 mm, autour de la cavité 4. En général la prédécoupe 8 comporte trois discontinuités. Le support 2 ainsi obtenu, à une sortie du moyen 7, est envoyé à une entrée d'un moyen 9 d'assemblage. Le moyen 9 permet de placer dans la cavité 4 un micromodule 10. Le micromodule 10 comporte principalement des broches métalliques et un ensemble de microcircuits intégrés électroniques comportant notamment une mémoire de données et un microprocesseur (non représentés). En sortie du moyen 9, on obtient un premier insert 11 dans l'endroit 5 du support 2. Généralement, le support 2 utilisé est un support de carte à puce en plastique. De plus le support 2 est un support plan.

Avec le procédé de l'invention, le support 2, comportant l'insert 11 ainsi réalisé, est envoyé à nouveau au début de la chaîne 1 à l'entrée du moyen 3. Tout d'abord, on fait pivoter le support 2 afin de présenter en entrée du moyen 3 un deuxième endroit 12 dans lequel aucun insert n'a encore été réalisé. Ainsi, le moyen 3 réalise une deuxième cavité 13 dans le deuxième endroit 12. Le support 2 est ensuite envoyée à l'entrée du moyen 7. Le moyen 7 réalise une prédécoupe 14 autour de la cavité 13. La prédécoupe 14 est réalisée de la même manière que la prédécoupe 8. Le support 2, avec la cavité 13 et la prédécoupe 14, est envoyée à l'entrée du moyen 9 ainsi qu'un deuxième micromodule 15. Le moyen 9 place le micromodule 15 dans la cavité 13 et on obtient un deuxième insert 16 à la sortie du moyen 9.

En fonction d'une disposition de l'insert 11 et de l'insert 16 sur le support 2 deux solutions peuvent se présenter. Dans une première solution, la chaîne 1 réalise des inserts 11 et 16 à des endroits 5 et 12 respectivement excentrées des coins du support 2. On rappelle que le support 2 est rectangulaire avec une longueur et une largeur, la longueur étant plus grande que la largeur. On définit en outre un axe 17 longitudinal parallèle à la longueur et passant à égale distance des bords s'étendant selon la longueur. Ainsi, une position excentrée correspond à une position plus proche de l'axe 17 que des bords du support 2 s'étendant selon la longueur. Dans ce premier cas, la chaîne 1 ne permet pas de réaliser plus de deux inserts sur le support 2. En conséquence, après le deuxième passage le support 2 est prélevé afin d'être envoyé dans une autre chaîne de traitement, par exemple une chaîne de stockage.

Dans une deuxième solution, la chaîne 1 réalise des inserts 11 et 16 à des endroits 5 et 12 respectivement correspondant à des coins du support 2. L'insert 11 ou l'insert 16 est plus proche d'un bord s'étendant selon la longueur que de l'axe 17. Dans un exemple préféré, l'insert 11 et l'insert 16 sont dans deux endroits 5 et 12 respectivement qui sont situés sur une même première diagonale du support 2 du côté de la face 6. Dans ce deuxième cas, on envoie le support 2 à l'entrée de la chaîne 1. Avant cela, on fait pivoter le support 2 autour de l'axe 17 de 180° et on présente le support 2 en entrée du moyen 3. Avec cette rotation, on permet au moyen 3 de réaliser une troisième cavité 18 dans un troisième endroit 19 sur une deuxième face 20 du support 2. Le support 2 est ensuite envoyé en entrée du moyen 7 qui réalise une prédécoupe 21 autour de la cavité 18. Une fois cette prédécoupe 21 réalisée, le support 2 est envoyée en entrée du moyen 9 ainsi qu'un micromodule 22. On obtient ainsi un troisième insert 23 dans l'endroit 19.

Le support 2 est envoyée une quatrième fois en entrée du moyen 3. On fait pivoter le support 2 afin de présenter au moyen 3 un quatrième endroit 24 sur la face 20 ne comportant aucun insert. Ainsi le moyen 3 réalise dans cet endroit 24 une cavité 25 sur la deuxième face 20 du support 2. Le support 2 avec sa cavité 25 ainsi obtenu en sortie du moyen 3 est envoyé en entrée du moyen 7. Le moyen 7 réalise une prédécoupe 26 autour de la cavité 25 tel que précédemment. Une fois le support 2 présent en sortie du moyen 7 il est envoyé en entrée du moyen 9 pour être assemblé avec un micromodule 27. En sortie du moyen 9 on obtient un quatrième insert 28. Ainsi, l'insert 23 et l'insert 28 sont dans deux endroits 19 et 24 respectivement qui sont situés sur une même deuxième diagonale du support 2 sur la face 20.

Le support 2 comporte ainsi quatre inserts 11, 16, 23 et 28 réduisant en conséquence d'un facteur quatre une quantité de matière utilisée pour la réalisation d'un insert. Cela revient à diviser par quatre une surface du support 2 donc un prix de revient d'un insert ne dépend plus d'une surface de l'ordre de 46 cm² mais d'une surface de l'ordre de 11,5 cm². On réduit aussi une masse d'un stock d'inserts par quatre dans le cas où on réalise quatre inserts sur un support et par deux dans le cas où on réalise seulement deux inserts sur un support, le choix de l'une ou l'autre de ces deux solutions est en fonction du positionnement du premier insert 11 sur le support 2 par la chaîne 1 de fabrication.

Au lieu de réaliser complètement un insert avant d'en réaliser un autre on pourrait dans une variante faire passer deux ou quatre fois le support 2, selon le procédé de réalisation utilisé, dans le moyen 3. Après le dernier passage, le support 2, présent en sortie du moyen 3, passe deux ou quatre fois dans le moyen 7 puis de même avec le moyen 9. Ceci permet de diminuer une longueur d'un chemin de retour permettant de placer à nouveau un insert en entrée de la chaîne 1.

En conséquence, un choix d'une solution permettant de réaliser deux ou quatre inserts sur un même support dépend du procédé utilisé. C'est à dire que ce choix dépend de la position du premier insert réalisé. Si on essaie de réaliser quatre inserts sur un même support où le premier insert est plus proche de l'axe 17 que d'un bord s'étendant suivant la longueur alors on aura deux inserts qui vont se chevaucher. Ces deux inserts seront inutilisables et de plus la prédécoupe de l'un risquera de détériorer l'autre.

Dans une variante de la solution choisie et en sortie du moyen 9 par exemple, on place un film protecteur (non représenté) sur un insert ainsi réalisé. Ce film protecteur a pour fonction de protéger le ou les inserts déjà réalisés lors d'un nouveau passage du support 2 dans la chaîne 1. On évite ainsi tout risque de détérioration d'un micromodule lors d'un nouveau passage dans la chaîne 1. Dans un exemple préféré, le film protecteur est réalisé en utilisant un film adhésif mais dont une partie en contact avec un micromodule ne comporte pas d'adhésif afin de ne pas encrasser les broches métalliques d'un insert ce qui perturberait un contact électrique avec un téléphone mobile par exemple.

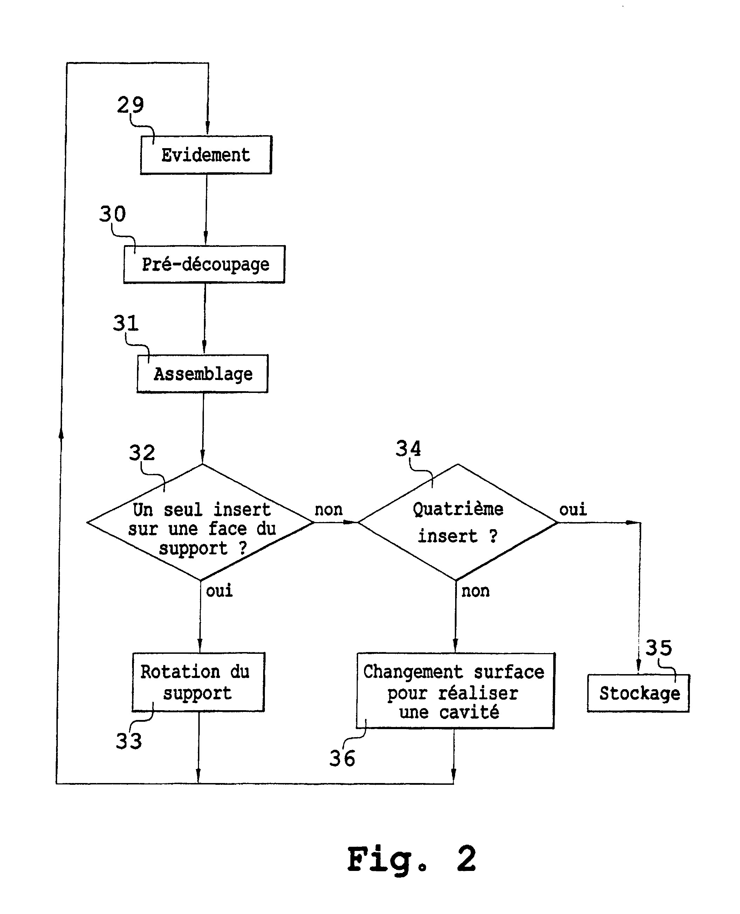

La figure 2 montre une représentation sous forme d'un algorithme, d'un fonctionnement du procédé de l'invention dans le cas de la réalisation de quatre inserts sur un même support. Dans une première étape 29 d'évidement, le procédé réalise une cavité dans un endroit du support présenté en entrée du moyen 3 d'évidement. Le support 2 présent en sortie du moyen 3 est envoyé, dans une étape 30, en entrée du moyen 7 de prédécoupage. Dans cette étape 30, le moyen 7 réalise une prédécoupe autour de la cavité réalisée dans l'étape 29. L'étape 29 et l'étape 30 sont permutables, c'est à dire qu'on peut réaliser indifféremment une cavité avant une prédécoupe ou une prédécoupe avant la cavité. Une fois présenté en sortie du moyen 7, le support 2 est envoyé, dans une étape 31, en entrée du moyen 9 d'assemblage. Le moyen 9, dans l'étape 31, place dans la cavité réalisée dans l'étape 29 un micromodule. Une fois le support 2 présent en sortie du moyen 9, on contrôle dans une étape 32 un nombre d'inserts réalisés sur une même face 6 ou 20 du support 2. Si au plus un insert a été réalisé sur une même face 6 ou 20 alors on réalise, dans une étape 33, une rotation du support 2 afin de réaliser un deuxième insert sur cette même face. Suite à cette rotation dans l'étape 33 le support 2 est envoyé en entrée de la chaîne 1 de traitement et se retrouve ainsi à nouveau dans l'étape 29 d'évidement.

Si dans l'étape 32 on détermine qu'il y a déjà deux inserts sur une même face alors, dans une étape 34, on contrôle si on a déjà réalisé quatre inserts sur un même support 2. Dans ce cas, dans une étape 35 de stockage, le support 2 est prélevé de la chaîne 1 pour être envoyé vers une chaîne de stockage par exemple. Dans le cas contraire, dans une étape 36, on change de surface de travail, c'est-à-dire de surface sur laquelle on réalise une cavité. Dans cette étape 36 on présente ensuite le support 2 en entrée de la chaîne 1 de telle manière qu'un endroit dans lequel va être réalisée une cavité, si la première étape est l'étape 29, ou une prédécoupe, si la première étape est l'étape 30, ne comporte pas déjà un insert réalisé sur l'autre face du support 2.

On pourrait très bien envisager dans une variante de réaliser tous les inserts sur une même face du support 2. Dans ce cas on modifie les moyens 3, 7 et 9 de la chaîne 1. Les moyens 3, 7 et 9 deviennent mobiles et ainsi se déplace d'un endroit à un autre du support 2. Avec cette variante on réalise chaque étape quatre fois mais consécutivement. On pourrait aussi très bien envisager que la chaîne 1 réalise quatre inserts simultanément sur le support 2. Pour cela il suffirait de multiplier par quatre les fonctions des moyens 3, 7 et 9.

Dans le cas où on utilise un procédé de l'état de la technique pour lequel on ne peut réaliser que deux inserts sur un même support alors une réponse négative au test de l'étape 32 indique que le support considéré peut être prélevé afin d'être stocké par exemple, comme dans l'étape 35 de stockage.

## Revendications

1. Procédé de fabrication d'inserts (11, 16, 23, 28) à partir d'un support (2) dans lequel :
(a) on réalise une première cavité (4) dans un premier endroit (5) sur une première face (6) du support (2) avec un moyen d'évidement (3),
(b) on réalise une prédécoupe (8) autour de la première cavité (4) avec un moyen de prédécoupe (7),
(c) on place un premier micromodule (10) dans la première cavité (4) et on obtient un premier insert (11),
**caractérisé en ce que**, après les étapes (a), (b) et (c) :
(d) on pivote le support, et
(e) on réalise une deuxième cavité (13) dans un deuxième endroit (12) sur une face du support (2) avec le même moyen d'évidement,
(f) on réalise une prédécoupe (14) autour de la deuxième cavité (13) avec le même moyen de prédécoupe,
(g) on place un deuxième micromodule (15) dans la deuxième cavité (13) et on obtient un deuxième insert (16).

2. Procédé selon la revendication 1 **caractérisé en ce que** :
- on utilise, comme support (2), un support de carte à puce.

3. Procédé selon l'une des revendications 1 ou 2 **caractérisé en ce que** :
- on place le deuxième insert (16) dans le deuxième endroit (12) sur une première diagonale passant par le premier insert (11) sur la première face (6) du support (2).

4. Procédé selon l'une des revendications 1 à 3 **caractérisé en ce que**:
- on pivote le support, et
- on réalise une troisième cavité (18) dans un troisième endroit (19) sur une face du support (2) avec le même moyen d'évidement,
- on réalise une prédécoupe (21) autour de la troisième cavité avec le même moyen de prédécoupe,
- on place un micromodule (22) pour obtenir un troisième insert (23) dans le troisième endroit sur une deuxième face (20) du support (2) différente de la première face (6).

5. Procédé selon la revendication 4 **caractérisé en ce que**
- on pivote le support, et
- on réalise une quatrième cavité (25) dans un quatrième endroit (24) sur une face du support (2) avec le même moyen d'évidement,
- on réalise une prédécoupe (26) autour de la quatrième cavité avec le même moyen de prédécoupe,
- on place un micromodule (27) pour obtenir un quatrième insert (28), sur une deuxième diagonale, dans le quatrième endroit (24) sur la deuxième face (20) du support (2).

6. Procédé selon l'une des revendications 1 à 5 **caractérisé en ce que**
- on place un film protecteur sur un insert déjà réalisé avant de réaliser un nouvel insert.

7. Procédé selon l'une des revendications 1 à 6 **caractérisé en ce que**
- on réalise la prédécoupe, et ensuite
- on réalise la cavité à l'intérieur de la prédécoupe.

## Patentansprüche

1. Verfahren zum Herstellen von Einsätzen (11, 16, 23, 28) aus einem Träger (2), in welchem:
(a) ein erster Hohlraum (4) an einem ersten Ort (5) auf einer erste Fläche (6) des Trägers (2) mit einem Aushöhlungsmittel (3) erzeugt wird,
(b) ein Vorausschnitt (8) um den ersten Hohlraum (4) mit einem Vorschneidemittel (7) erzeugt wird,
(c) ein erstes Mikromodul (10) in dem ersten Hohlraum (4) angeordnet wird und sich so ein erster Einsatz (11) ergibt,
**dadurch gekennzeichnet, dass**
nach den Schritten (a), (b) und (c)
(d) der Träger gedreht wird,
(e) ein zweiter Hohlraum (13) an einem zweiten Ort (12) mit demselben Aushöhlungsmittel erzeugt wird,
(f) ein Vorausschnitt (14) um den zweiten Hohlraum (13) mit demselben Vorschneidemittel erzeugt wird,
(g) ein zweites Mikromodul (15) in dem zweiten Hohlraum (13) angeordnet wird, so dass sich ein zweiter Einsatz (16) ergibt.

2. Verfahren nach Anspruch 1,
**dadurch gekennzeichnet, dass**
als Träger (2) ein Träger einer Chipkarte verwendet wird.

3. Verfahren nach Anspruch 1 oder 2,
**dadurch gekennzeichnet, dass**
ein zweiter Einsatz (16) an dem zweiten Ort (12) auf einer ersten Diagonale durch den ersten Einsatz (11) auf der ersten Fläche (6) des Trägers (2) angeordnet wird.

4. Verfahren nach einem der Ansprüche 1 bis 3,
**dadurch gekennzeichnet, dass**
der Träger gedreht wird und
ein dritter Hohlraum (18) an einem dritten Ort (19) auf einer Fläche des Trägers (2) mit demselben Aushöhlungsmittel erzeugt wird,
ein Vorausschnitt (21) um den dritten Hohlraum mit demselben Vorschneidemittel erzeugt wird,
ein Mikromodul (22) an dem dritten Ort auf einer zweiten Fläche (20) des Trägers (2), die sich von der ersten Fläche (6) unterscheidet, angeordnet wird, so dass sich ein dritter Einsatz (23) ergibt.

5. Verfahren nach Anspruch 4,
**dadurch gekennzeichnet, dass**
der Träger gedreht wird und
ein vierter Hohlraum (25) an einem vierten Ort (24) auf einer Fläche des Trägers (2) mit demselben Aushöhlungsmittel erzeugt wird,
ein Vorausschnitt (26) um den vierten Hohlraum mit demselben Vorschneidemittel erzeugt wird,
ein Mikromodul (27) auf einer zweiten Diagonale an dem vierten Ort (24) auf der zweiten Fläche (20) des Trägers (2) angeordnet wird, so dass sich ein vierter Einsatz (23) ergibt.

6. Verfahren nach einem der Ansprüche 1 bis 5,
**dadurch gekennzeichnet, dass**
ein Schutzfilm auf einem Einsatz angeordnet wird, der bereits hergestellt ist, bevor ein neuer Einsatz hergestellt wird.

7. Verfahren nach einem der Ansprüche 1 bis 6,
**dadurch gekennzeichnet, dass**
der Vorausschnitt erzeugt wird und anschließend
der Hohlraum innerhalb des Vorausschnitts erzeugt wird.

## Claims

1. A procedure for producing inserts (11, 16, 23, 28) from a medium (2) in which:
(a) a first cavity (4) is made in a first position (5) on a first face (6) of the medium (2) using a means of hollowing out (3),
(b) a preliminary cut-out (8) is made around the first cavity (4) using a means of preliminary cutting out (7),
(c) a first micro-module (10) is placed in the first cavity (4) and a first insert (11) is obtained,
**characterised in that**, after stages (a), (b) and (c):
(d) the medium is pivoted and
(e) a second cavity (13) is made in a second position (12) on a face of the medium (2) using the same means of hollowing out,
(f) a preliminary cut-out (14) is made around the second cavity (13) using the same means of preliminary cutting out,
(g) a second micro-module (15) is placed in the second cavity (13) and a second insert (16) is obtained.

2. A procedure according to Claim 1, **characterised in that**:
- a chip card medium is used as the medium (2).

3. A procedure according to Claim 1 or Claim 2, **characterised in that**:
- the second insert (16) is placed in the second position (12) on a first diagonal passing through the first insert (11) on the first face (6) of the medium (2).

4. A procedure according to one of Claims 1 to 3, **characterised in that**:
- the medium is pivoted, and
- a third cavity (18) is made in a third position (19) on a face of the medium (2) using the same means of hollowing out,
- a preliminary cut-out (21) is made around the third cavity using the same means of preliminary cutting out,
- a micro-module (22) is placed to obtain a third insert (23) in the third position on a second face of the medium (2) different from the first face (6).

5. A procedure according to Claim 4 **characterised in that**:
- the medium is pivoted, and
- a fourth cavity (25) is made in a fourth position (24) on a face of the medium (2) using the same means of hollowing out,
- a preliminary cut-out (26) is made around the fourth cavity using the same means of preliminary cutting out,
- a micro-module (27) is placed to obtain a fourth insert (28), on a second diagonal, in the fourth position (24) on the second face (20) of the medium (2).

6. A procedure according to one of Claims 1 to 5 **characterised in that**:
- a protective film is placed on an insert already made before making a new insert.

7. A procedure according to one of Claims 1 to 6 **characterised in that**:
- the preliminary cut-out is made, and then
- the cavity is made within the preliminary cut-out.
